# EUROPÄISCHE PATENTSCHRIFT

(11) **EP 3 096 963 B1**
(45) Veröffentlichungstag und Bekanntmachung des Hinweises auf die Patenterteilung: **17.10.2018**
(21) Anmeldenummer: 14823967.6
(22) Anmeldetag: 17.12.2014
(51) Int. Cl.: B60G 7/00, B60G 3/20

(54) **BAUTEILANBINDUNG MIT QUERKRAFTABSTÜTZENDER STÜTZFLÄCHE**
COMPONENT ATTACHMENT WITH A TRANSVERSE FORCE-SUPPORTING SURFACE
ATTACHE DE COMPOSANT AVEC SURFACE DE SUPPORT SUPPORTANT LES FORCES TRANSVERSALES

(30) Priorität: 22.01.2014 DE 102014201057
(43) Veröffentlichungstag der Anmeldung: 30.11.2016
(73) Patentinhaber: ZF Friedrichshafen AG, 88046 Friedrichshafen (DE)
(72) Erfinder: GRAEULER, Dirk, 49191 Belm (DE)
(86) Internationale Anmeldenummer: PCT/EP2014/078142
(87) Internationale Veröffentlichungsnummer: WO 2015/110230

(56) Entgegenhaltungen:
- EP-A1- 0 265 675
- EP-A1- 0 268 007
- EP-A2- 0 317 727
- EP-A2- 1 034 949
- DE-A1- 2 365 798
- DE-A1- 19 622 861
- DE-A1-102009 043 552
- DE-A1-102009 045 349
- DE-A1-102011 106 643
- DE-A1-102012 206 132
- DE-C1- 3 801 640
- FR-A1- 2 258 279
- FR-A1- 2 832 100
- FR-A1- 2 982 531
- JP-A- H04 183 622
- JP-A- H05 139 131
- US-A- 2 962 279
- US-A- 5 145 204
- US-A- 5 238 262
- US-A- 5 362 092
- US-A- 5 577 854

## Beschreibung

Die vorliegende Erfindung betrifft eine Bauteilanbindung für eine Radaufhängung eines Kraftfahrzeugs gemäß der im Patentanspruch 1 näher definierten Art. Des Weiteren betrifft die Erfindung die Verwendung einer Bauteilanbindung im Fahrwerk eines Kraftfahrzeuges sowie ein Verfahren zur Herstellung einer Bauteilanbindung, insbesondere in einem Fahrwerk eines Kraftfahrzeugs.

Bei Kraftfahrzeugradaufhängungen sind in allgemein bekannter Art und Weise Lenker mit einem Radträger, einem Aufbau und/oder einem Hilfsrahmen gelenkig verbunden. Hierfür weisen die Lenker an zumindest einem ihrer beiden Enden ein Lager auf. Insbesondere Querlenker sowie Spurlenker sind radseitig über eine einschnittige Verbindung mit dem Radträger verbunden. Bei einer einschnittigen Verbindung liegt eine Innenhülse des Lagers mit nur einer ihrer beiden Stirnseiten in einem einzigen Verbindungsbereich am Radträger an und ist mit diesem mittels eines Befestigungsmittels lösbar verbunden. Da die Befestigungsmittel primär dazu ausgebildet sind, um Zugkräfte aufzunehmen, besteht bei dieser Art von Verbindung der Nachteil, dass sich das Befestigungsmittel bei auftretenden Querkräften verbiegt, wodurch die Lager gegenüber dem Radträger zu klaffen beginnen. Hierbei hebt sich die Lagerinnenhülse in einem Bereich vom Radträger ab, wodurch die Kinematik der Radaufhängung negativ beeinflusst wird, da die Bauteile nicht mehr aufeinander liegen.

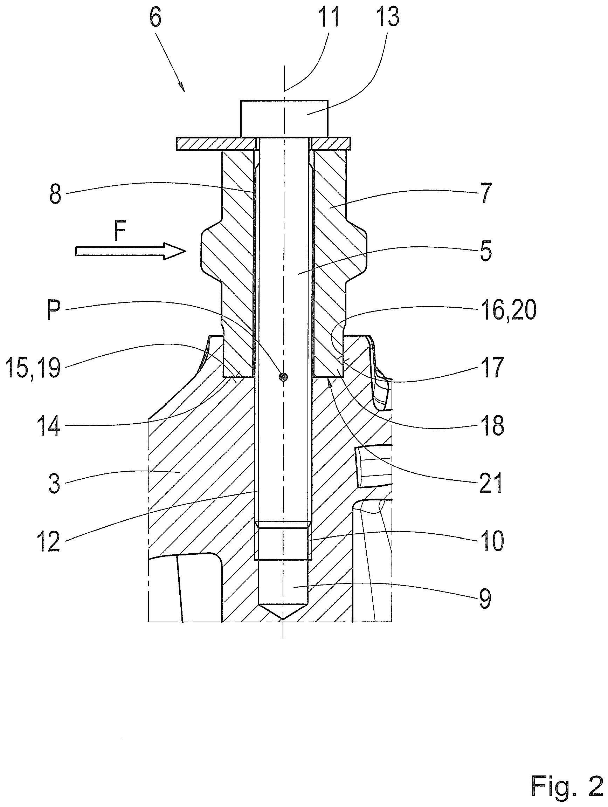

Aus EP 0 268 007 A1 ist eine Bauteilanbindung bekannt, welche zur Lagerung eines Führungslenkers einer Radaufhängung gegenüber einem Längsträger eines Fahrzeug dient und welche einzelne Merkmale der in Anspruch 1 beschriebenen Bauteilanbindung offenbart. Die Bauteilanbindung weist einen Mehrpunktlenker auf, der an einem Ende ein Gummilager mit einer Innenhülse aufweist und mittels eines lösbaren Befestigungsmittels in Form eines Schraubbolzens gegenüber einem in einem Längsträger eines Fahrzeugs befestigten Stützarm 1 verbunden ist (vgl. dortige Fig. 2 sowie Beschreibung Seite 3, Mitte). Der Schraubbolzen presst die Innenhülse in Axialrichtung mit einer dem Stützarm zugewandten Anlagefläche gegen eine Anschlagsfläche des Stützarms. Dazu erstreckt sich der Schraubbolzen durch die Innenhülse hindurch bis in eine zur Innenhülse koaxiale Bohrung, in die der Schraubbolzen eingeschraubt ist. Die Abstützung von in Radialrichtung auftretenden Querkräften ist bei der Gestaltung gemäß EP 0 268 007 A1 nur begrenzt möglich. Die gezeigte Bauteilanbindung betrifft keine Anbindung zwischen einem Lenker und einem Radträger.

Aus US 5,362,092 sowie US 2,962,279 sind weitere Bauteilanbindungen bekannt, um jeweils einen Lenker mittels eines Lagers beweglich gegenüber dem Fahrzeugaufbau zu lagern. Anbindungen zwischen einem Lenker und einem Radträger werden darin nicht beschrieben.

Es ist eine Aufgabe der vorliegenden Erfindung, eine Bauteilanbindung zur Verbindung eines Lenkers mit einem Radträger anzugeben, welche bei betrieblich auftretenden Querkräften einen verringerten Einfluss auf die Kinematik der Radaufhängung ausübt.

Die der Erfindung zu Grunde liegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Bauteilanbindung für eine Radaufhängung eines Kraftfahrzeuges vorgeschlagen, die einen Lenker, insbesondere einen Spurlenker und/oder Querlenker, und ein Anbindungsbauteil in Form eines Radträgers umfasst. Diese sind durch ein Befestigungsmittel, insbesondere einen Bolzen und/oder eine Schraube, lösbar miteinander verbunden. Der Lenker weist an zumindest einem seiner Enden ein Lager, insbesondere ein Gummilager, mit einer Innenhülse auf. Das Befestigungsmittel presst die Innenhülse in Axialrichtung mit einer dem Radträger zugewandten ersten Anlagefläche gegen eine Anschlagsfläche des Radträgers. Hierdurch erfolgt eine axiale Verspannung des Lagers, insbesondere der Innenhülse, mit dem Radträger. Um das Befestigungsmittel von einwirkenden Querkräften zu entkoppeln bzw. deren Einfluss zu minimieren, weist der Radträger eine Stützfläche auf. An dieser Stützfläche liegt die Innenhülse mit einer zweiten Anlagefläche an. Die Stützfläche ist gegenüber der Anschlagsfläche derart geneigt, dass mittels ihr im Bereich des Lagers in Radialrichtung auftretende Querkräfte abstützbar sind. Hierdurch kann die Lageranbindung im Vergleich zu aus dem Stand der Technik bekannten Anbindungen höhere Querkräfte aufnehmen, ohne dass hierbei ein Klaffen der Bauteilanbindung hervorgerufen wird, d.h. dass auch bei Belastung die Anlageflächen bzw. die Stützfläche von Innenhülse und Anbindungsbauteil flächig in Kontakt verbleiben und auch temporär kein Spalt zwischen den genannten Bauteilen entsteht, und sich diese zueinander bewegen. Des Weiteren kann das Befestigungsmittel durch Stützflächenunterstützung kleiner dimensioniert werden, wodurch Bauraum sowie Herstellungskosten reduziert werden können. Erfindungsgemäß weist der Radträger eine Aussparung auf, in die sich die Innenhülse mit ihrem dem Radträger zugewandten Ende hinein erstreckt, wobei sich das Befestigungsmittel durch die Innenhülse hindurch bis in eine zur Innenhülse koaxiale Bohrung hinein erstreckt, in die das Befestigungsmittel eingeschraubt ist. Um die Herstellungskosten der Bauteilanbindung möglichst gering zu halten, ist sind Aussparung und die Bohrung zusammen als Einheit in Form einer Stufenbohrung ausgebildet sind. Hierbei weist zweckmäßigerweise die Aussparung im Vergleich zur Bohrung einen größeren Durchmesser auf.

Vorteilhaft ist es, wenn die Stützfläche im Längsschnitt der Bauteilanbindung parallel zur Längsachse des Befestigungsmittels ausgerichtet ist. Hierdurch wirken die Querkräfte lotrecht auf die Stützfläche ein, so dass diese zur Vermeidung eines Klaffens bestmöglich aufgenommen werden können. Des Weiteren kann bei der Montage der Bauteilanbindung durch eine derartige in Radialrichtung lotrechte bzw. zur Längsachse parallele Anordnung der Stützfläche eine sehr einfache Montage der Bauteilanbindung erfolgen. Demnach kann die Innenhülse sehr schnell und einfach entlang der Längsachse der Bauteilanbindung in eine Aussparung des Anbindungsbauteils eingebracht werden.

Konstruktiv einfach kann die Stützfläche am Anbindungsbauteil derart ausgebildet werden, wenn das Anbindungsbauteil eine, vorzugsweise zylindrische, Aussparung aufweist. In diese erstreckt sich die Innenhülse mit ihrem dem Anbindungsbauteil zugewandten Ende hinein. Die Aussparung ist vorzugsweise als rotationssymmetrischer Körper ausgebildet. Des Weiteren ist die Aussparung vorzugsweise koaxial zur Längsachse des Befestigungsmittels angeordnet. Vorzugsweise weisen die Durchmesser des Anbindungsbauteils hinsichtlich ihrer Stützfläche und der Innenhülse hinsichtlich ihrer zweiten Anlagefläche das gleiche Nennmaß auf. Die Bauteile sind vorzugsweise über eine Passung, insbesondere Übergangs- oder Übermaßpassung miteinander verbunden. Im Falle eine Spielpassung wird das Toleranzfeld derart gewählt, dass kaum merkliches Spiel zwischen den vorgenannten Bauteilen besteht oder die Bauteile gerade noch (von Hand) gegeneinander verschiebbar sind.

Aus gleichen Gründen ist es zusätzlich oder alternativ vorteilhaft, wenn die Stützfläche durch eine Seitenfläche, insbesondere durch eine zylindrische Innenmantelfläche, der Aussparung gebildet ist. Vorzugsweise ist die Seitenfläche parallel und/oder koaxial zur Längsachse der Bauteilanbindung bzw. des Befestigungsmittels ausgebildet. Hierdurch greift die aus der in Bezug auf das Befestigungsmittel in Radialrichtung einwirkenden Querkräfte resultierende Kraft im Wesentlichen lotrecht an der Seitenfläche an. Vorteilhafterweise können mittels der Stützfläche somit sehr hohe Querkräfte aufgenommen werden, wodurch das Befestigungsmittel kleiner dimensioniert werden kann.

In einer vorteilhaften Weiterbildung der Erfindung ist die erste Anlagefläche an dem bauteilseitigen Ende der Innenhülse - d.h. demjenigen Ende, das dem Anbindungsbauteil zugewandt ist - ausgebildet. Vorzugsweise ist die erste Anlagefläche an der Stirnseite der Innenhülse ausgebildet und/oder durch die Stirnfläche gebildet. Des Weiteren ist es vorteilhaft, wenn zusätzlich oder alternativ die mit dieser ersten Anlagefläche korrespondierende Anschlagsfläche im Inneren der Aussparung ausgebildet ist. Vorzugsweise ist die Anschlagsfläche hierbei durch eine, insbesondere kreisförmige, Grundfläche der Aussparung gebildet. Diese konstruktive Ausgestaltung der Bauteilanbindung ist besonders vorteilhaft, wenn die Innenhülse und/oder das Anbindungsbauteil aus Aluminium hergestellt sind, da der Durchmesser der Aussparung sowie der Durchmesser des bauteilseitigen Endes der Innenhülse somit relativ groß ausgebildet werden können. Vorteilhafterweise kann die Bauteilanbindung hierdurch relativ große Kräfte aufnehmen, bevor sich das im Vergleich zu Stahl weichere Aluminium verformt.

Alternativ ist es insbesondere bei einer Stahlpaarung - d.h. wenn sowohl die Innenhülse als auch das Anbindungsbauteil aus Stahl hergestellt sind - vorteilhaft, wenn die erste Anlagefläche in Axialrichtung vom bauteilseitigen Ende der Innenhülse, insbesondere durch die in Axialrichtung dazwischen angeordnete Stützfläche, beabstandet angeordnet ist. Hierbei ist es zusätzlich oder alternativ vorteilhaft, wenn die mit dieser ersten Anlagefläche korrespondierende Anschlagsfläche außerhalb der Aussparung ausgebildet ist. Vorzugsweise ist die Anschlagsfläche durch eine der Innenhülse zugewandte Außenfläche des Anbindungsbauteils ausgebildet. Vorteilhafterweise kann somit der Verbindungsbereich des Anbindungsbauteils kleiner dimensioniert werden, wodurch Gewicht eingespart werden kann.

Insbesondere in Verbindung mit den vorstehend genannten Merkmalen ist es vorteilhaft, wenn der Abstand in Axialrichtung zwischen dem bauteilseitigen Ende der Innenhülse und deren erster Anlagefläche kleiner ist als die axiale Tiefe der Aussparung, so dass zwischen dem Ende der Innenhülse und der Grundfläche der Aussparung ein Freiraum ausgebildet ist. Hierdurch kann sichergestellt werden, dass bei einer Verspannung der Innenhülse mit dem Anbindungsbauteil die erste Anlagefläche bündig gegen die Anschlagsfläche des Anbindungsbauteils gepresst wird.

Insbesondere bezüglich der vorstehend genannten Weiterbildung der Erfindung ist es ferner vorteilhaft, wenn die Stützfläche durch einen vom bauteilseitigen Ende der Innenhülse ausgehenden zylindrischen Schaftabschnitt, insbesondere Eingriffsabschnitt, ausgebildet ist. Zusätzlich ist es vorteilhaft, wenn die vom bauteilseitigen Ende der Innenhülse beabstandete Anschlagsfläche durch einen sich an diesen Schaftabschnitt anschließenden Absatz ausgebildet ist. Hierdurch kann die Stützfläche und die dazu benachbarte Anschlagsfläche sehr schnell und einfach hergestellt werden.

Zur Vereinfachung der Montage ist es vorteilhaft, wenn die erste Anlagefläche und die damit korrespondierende Anschlagsfläche konisch ausgebildet sind, so dass eine Bohrung des Anbindungsbauteils zur Durchgangsöffnung der Innenhülse koaxial ausgerichtet ist. Somit kann vorteilhafterweise das Befestigungsmittel zum Verspannen dieser beiden Bauteile sehr einfach durch die Innenhülse hindurch geführt und in der Bohrung verschraubt werden.

Vorteilhaft ist es, wenn die Innenhülse und/oder das Anbindungsbauteil aus Stahl und/oder Aluminium hergestellt sind.

Ebenso ist es vorteilhaft, wenn sich das Befestigungsmittel durch die Innenhülse hindurch bis in eine zur Innenhülse koaxiale Bohrung hinein erstreckt, in die das Befestigungsmittel vorzugsweise eingeschraubt ist. Infolgedessen weist die Bohrung vorzugsweise ein Innengewinde auf. Des Weiteren ist das Befestigungsmittel insbesondere als Bolzen ausgebildet, der an seinem dem Anbindungsbauteil zugewandten Ende ein Außengewinde aufweist, um in das Innengewinde der Bohrung eingeschraubt werden zu können.

Die zuvor beschriebene Bauteilanbindung eignet sich somit insbesondere zur Verwendung einer Bauteilanbindung im Fahrwerk eines Kraftfahrzeuges zwischen einem Lenker, insbesondere einem Mehrpunktlenker, und einem Radträger. Der Mehrpunktlenker ist dabei vorzugsweise als zumindest ein Längs- und/ oder Querlenker ausgebildet. Somit fallen auch sogenannte Schräglenker unter die vorgenannten Mehrpunktlenker, die, wenn z.B. als Zweipunktlenker ausgebildet, sowohl in Längsrichtung als auch in Querrichtung (in Bezug zur Fahrtrichtung des Kraftfahrzeuges) wirken. Als Mehrpunktlenker kommen insbesondere Zweipunktlenker, Dreipunktlenker oder auch Vierpunktlenker in Frage.

Die Erfindung betrifft des Weiteren ein Verfahren zur Herstellung einer Bauteilanbindung wie zuvor beschrieben. Die Bauteilanbindung wird insbesondere im Kraftfahrzeug- Fahrwerk eingesetzt, vorzugsweise zwischen einem Radführungsbauteil, insbesondere einem Mehrpunktlenker und einem Anbindungsbauteil in Form eines Radträgers. Das Verfahren ist gekennzeichnet durch die nachfolgend aufgeführten Schritte, wobei die aufgeführten Schritte nicht auf die angegebene Reihenfolge beschränkt sind. Vielmehr kann in geeigneter Weise die dargestellte Reihenfolge variiert werden, so dass das Verfahren in Anpassung auf den Anwendungsfall möglichst effizient und kostengünstig ausgeführt werden kann.

Es wird zunächst eine Innenhülse mit zumindest einem festgelegten Außenmesser und zumindest einer ersten Anlagefläche hergestellt. Ebenfalls wird ein Form- und/ oder formschlüssiges Verbinden der Innenhülse mit dem Radführungsbauteil (Mehrpunktlenker) sichergestellt. Desweiteren wird der Radträger mit zumindest einer zur späteren Verbindung mit dem Radführungsbauteil dienenden und zum Außendurchmesser der Innenhülse passenden Bohrung mit zumindest einer Anlagefläche und zumindest einer Stützfläche hergestellt. Die Herstellung zeichnet sich insbesondere dadurch aus, dass der Außendurchmesser der Innenhülse und der Durchmesser der Bohrung das gleiche Nennmaß aufweisen. Innenhülse und Bohrung weisen hinsichtlich Ihrer Innen- bzw. Außendurchmesser eine Passung auf. Um das Radführungsbauteil mit dem Radträger verbinden zu können, werden die beiden Bauteile bereitgestellt und derart zueinander positioniert und gehalten, so dass das Radführungsbauteil gegenüber dem Radträger mit Ihren Anlageflächen- und / oder der Stützfläche aneinander bzw. ineinander anliegen. Dabei ist darauf zu achten, dass die Längsachsen der Bauteile zumindest annähern fluchten. Die Bauteile werden formschlüssig miteinander verbunden, wobei das Anbindungsbauteil mit dem Radträger insbesondere durch Verschrauben gefügt werden. Als Passungen für die Verbindung zwischen Radführungsbauteil und Radträger eignen sich vorzugsweise eine Übergangspassung oder eine Übermaßpassung. Bei diesen Passungen ist ein Spiel minimiert bzw. ausgeschlossen, so dass ein Klaffen effektiv verhindert wird.

Vorzugsweise ist die Bauteilanbindung als einschnittige Verbindung ausgebildet. Hierbei weist die Innenhülse und der Radträger nur einen einzigen Verbindungsbereich auf.

Nachfolgend ist die Erfindung anhand von Zeichnungen näher erläutert. Es zeigen:
Figur 1 eine perspektivische Ansicht einer Bauteilanbindung mit einem Lenker, der mittels eines Befestigungsmittels an einem Radträger lösbar befestigt ist,
Figur 2 eine Detailansicht des Verbindungsbereichs der Bauteilanbindung im Querschnitt gemäß einem ersten Ausführungsbeispiel und
Figur 3 eine Detailansicht des Verbindungsbereichs der Bauteilanbindung im Querschnitt gemäß einem zweiten Ausführungsbeispiel.

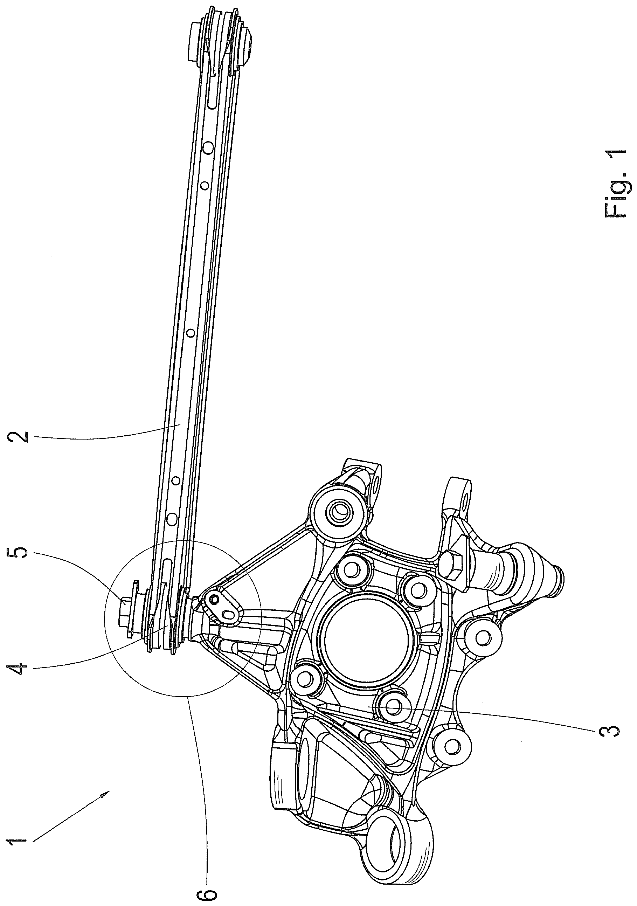

Figur 1 zeigt eine Lenkeranordnung 1 in perspektivischer Ansicht. Die Lenkeranordnung 1 umfasst einen Lenker 2 und ein Anbindungsbauteil 3. Gemäß dem in Figur 1 dargestellten Ausführungsbeispiel ist das Anbindungsbauteil 3 als Radträger ausgebildet. Der Lenker 2 ist vorzugsweise als Querlenker und/oder Spurlenker ausgebildet. Wie in Figur 1 dargestellt, ist der Lenker 2 mittels eines Lagers 4 gelenkig am Anbindungsbauteil 3 angebunden. Das Lager 4 ist an dem dem Anbindungsbauteil 3 zugewandten Ende des Lenkers 2 angeordnet. In diesem Bereich weist der Lenker 2 ein Auge auf, in dem das Lager 4 form- und/oder kraftschlüssig gehalten ist. Der Lenker 2 ist im Bereich des Lagers 4 durch ein Befestigungsmittel, insbesondere einen Schraubbolzen, mit dem Anbindungsbauteil 3 bzw. dem Radträger lösbar verbunden.

Gemäß Figur 1 weist der Lenker 2 an seinem dem Anbindungsbauteil 3 abgewandten Ende ein zum Lager 4 identisch ausgebildetes zweites Lager auf, mittels dem der Lenker 2 fahrzeugseitig gelenkig mit einem Aufbau und/oder einem Hilfsrahmen des hier nicht dargestellten Fahrzeugs verbunden werden kann.

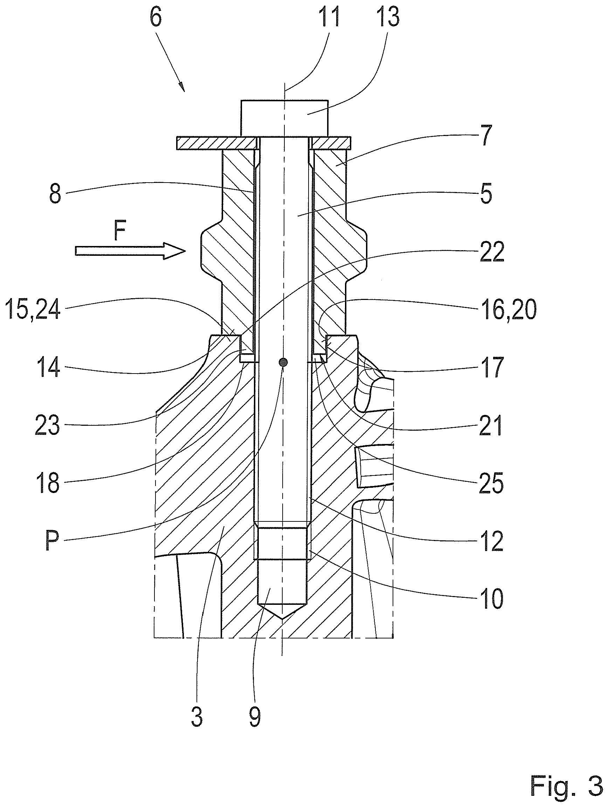

Die Figuren 2 und 3 zeigen jeweils eine Detailansicht des in Figur 1 dargestellten Verbindungsbereiches 6 im Querschnitt gemäß zwei unterschiedlicher Ausführungsbeispiele. Zur Wahrung der Übersichtlichkeit ist in diesen Figuren der Lenker 2 nicht dargestellt. Des Weiteren ist auch das Lager 4 auf die erfindungswesentlichen Merkmale reduziert.

Das gemäß Figur 1 im Auge des Lenkers 2 angeordnete Lager 4 umfasst gemäß Figur 2 eine Innenhülse 7 mit einer Durchgangsöffnung 8. Des Weiteren umfasst das Anbindungsbauteil 3 eine Bohrung 9 mit einem Innengewinde 10. Die Durchgangsöffnung 8 und die Bohrung 9 sind zueinander koaxial ausgerichtet und weisen demnach eine gemeinsame Längsachse 11 auf. Die Innenhülse 7 und das Anbindungsbauteil 3 sind in Axialrichtung, d.h. entlang der Längsachse 11, durch das Befestigungsmittel 5 miteinander verspannt. Hierfür erstreckt sich das Befestigungsmittel 5 durch die Durchgangsöffnung 8 der Innenhülse 7 hindurch bis in die zu dieser koaxial angeordneten Bohrung 9 des Anbindungsbauteils 3 hinein.

Das Befestigungsmittel 5 ist vorzugsweise als Bolzen ausgebildet. Dieser weist im Bereich seines dem Anbindungsbauteil 3 zugewandten Endes ein Außengewinde 12 auf, mittels dem das Befestigungsmittel 5 in die Bohrung 9 eingeschraubt ist. Beim Einschrauben wird die Innenhülse 7 aufgrund der formschlüssigen Kopplung mit dem Kopf 13 des Befestigungsmittels 5 in Richtung des Anbindungsbauteils 3 gedrückt. Hierbei wird eine dem Anbindungsbauteil 3 zugewandte erste Anlagefläche 14 der Innenhülse 7 gegen eine Anschlagsfläche 15 des Anbindungsbauteils 3 gepresst.

Gemäß Figur 2 wirken auf die Innenhülse 7 rechtwinklig zur Längsachse 11 Querkräfte F ein. Diese bewirken ein auf das Befestigungsmittel 5 um einen Drehpunkt P einwirkendes Drehmoment, das bei bekannten Verbindungsanordnungen aus dem Stand der Technik bei entsprechend hoher Querkraft F zum Klaffen der Lenkeranordnung 1 führt. Hierbei hebt sich die erste Anlagefläche 14 einseitig von der Anschlagsfläche 15 ab.

Um einem derartigen Klaffen entgegenzuwirken, umfasst das Anbindungsbauteil 3 eine Stützfläche 16. An dieser liegt die Innenhülse 7 mit einer zweiten Anlagefläche 17 an. Die Stützfläche 16 ist gegenüber der Anschlagsfläche 15 derart geneigt, insbesondere um 90°, dass mittels ihr die auf die Innenh ülse 7 einwirkenden Querkräfte F abstützbar sind. Demnach bewirkt gemäß Figur 2 die Querkraft F ein Drehmoment um den Drehpunkt P, das durch ein von der Stützfläche 16 bewirktes, entgegen gerichtetes Drehmoment kompensiert wird. Das Befestigungsmittel 5 ist somit primär auf Zug und nicht auf Biegung belastet.

Gemäß dem in Figur 2 dargestellten Längsschnitt des Verbindungsbereichs 6 der Bauteilanbindung 1 ist die Stützfläche 16 sowie die damit korrespondierende zweite Anlagefläche 17 parallel zur Längsachse 11 ausgerichtet. Die Flächennormalen der Stützfläche 16 sowie der zweiten Anlagefläche 17 sind demnach in Radialrichtung orientiert, wodurch eine maximale Querkraftaufnahme begünstigt wird.

Zur Ausbildung dieser die Querkräfte F aufnehmenden Stützeinrichtung weist das Anbindungsbauteil 3 gemäß Figur 2 eine Aussparung 18 auf. Gemäß dem vorliegenden Ausführungsbeispiel ist die Aussparung 18 zylindrisch ausgebildet. Sie umfasst demnach eine kreisförmige Grundfläche 19 sowie eine zylindrische Mantelfläche 20. Die Innenhülse 7 erstreckt sich mit ihrem dem Anbindungsbauteil 3 zugewandten Ende in diese Aussparung 18 hinein.

Gemäß Figur 2 bildet die Mantelfläche 20 der Aussparung 18 die Stützfläche 16 aus. An dieser liegt die Innenhülse 7 mit ihrem zylindrischen Außenumfang im Bereich ihres dem Anbindungsbauteil 3 zugewandten Endes im Wesentlichen spielfrei an. Des Weiteren liegt die Innenhülse 7 gemäß dem in Figur 2 dargestellten Ausführungsbeispiel mit ihrer Stirnseite 21 an der Grundfläche 19 der Aussparung 18 bündig an. Infolgedessen ist sowohl die Anschlagsfläche 15 als auch die Stützfläche 16 im Inneren der Aussparung 18 ausgebildet.

Der Durchmesser der Aussparung 18 ist größer als der Durchmesser der Bohrung 9. Die Aussparung 18 und die Bohrung 9 sind ferner koaxial zueinander angeordnet. Die Aussparung 18 und die Bohrung 9 sind somit als Stufenbohrung ausgebildet. Das in Figur 2 dargestellte Ausführungsbeispiel ist besonders gut geeignet, wenn die Innenhülse 7 und/oder das Anbindungsbauteil 3 aus Aluminium hergestellt sind.

Figur 3 zeigt ein alternatives Ausführungsbeispiel der Bauteilanbindung 1. Bei der nachfolgenden Beschreibung des in Figur 3 dargestellten zweiten Ausführungsbeispiels werden für gleiche Merkmale gleiche Bezugszeichen verwendet. Sofern diese nicht nochmals detailliert erläutert werden, entspricht deren Ausgestaltung und Wirkweise den vorstehend bereits beschriebenen Merkmalen des ersten Ausführungsbeispiels.

Im Unterschied zum in Figur 2 dargestellten ersten Ausführungsbeispiel weist das in Figur 3 dargestellte zweite Ausführungsbeispiel eine Innenhülse 7 mit einem Absatz 22 auf. Der Absatz 22 ist im Bereich des dem Anbindungsbauteil 3 zugewandten Endes der Innenhülse 7 ausgebildet. Der Absatz 22 bildet somit einen durchmesserreduzierten bauteilseitigen Eingriffsabschnitt 23 aus, der in die Aussparung 18 eingeschoben ist.

Ein weiterer Unterschied zum in Figur 2 dargestellten ersten Ausführungsbeispiel besteht darin, dass die erste Anlagefläche 14 in Axialrichtung von der Stirnseite 21 der Innenhülse 7 beabstandet angeordnet ist. Des Weiteren ist die mit der ersten Anlagefläche 14 korrespondierende Anschlagsfläche 15 außerhalb der Aussparung 18 ausgebildet. Die Anschlagsfläche 15 ist somit durch eine Außenfläche 24 des Anbindungsbauteils 3 ausgebildet.

Der Abstand in Axialrichtung zwischen der Stirnseite 21 der Innenhülse 7 und deren erster Anlagefläche 14 ist kleiner als die axiale Tiefe der Aussparung 18. Infolgedessen ist zwischen der Stirnseite 21 der Innenhülse 7 und der Grundfläche 19 der Aussparung 18 ein Freiraum 25 ausgebildet. Hierdurch wird sichergestellt, dass die Anschlagsfläche 15 und die Außenfläche 24 bzw. erste Anlagefläche 14 bündig aneinander liegen.

Gemäß dem in Figur 3 dargestellten Ausführungsbeispiel ist somit nur die Stützfläche 16 und die damit korrespondierende zweite Anlagefläche 17 innerhalb der Aussparung 18 ausgebildet. Die erste Anlagefläche 14 und die damit korrespondierende Anschlagsfläche 15 sind hingegen außerhalb der Aussparung 18 angeordnet. Das in Figur 3 dargestellte Ausführungsbeispiel eignet sich besonders gut für Ausführungen, bei denen sowohl die Innenhülse 7 als auch das Anbindungsbauteil 3 aus Stahl hergestellt sind.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

1. Bauteilanbindung
2. Lenker
3. Anbindungsbauteil
4. Lager
5. Befestigungsmittel
6. Verbindungsbereich
7. Innenhülse
8. Durchgangsöffnung
9. Bohrung
10. Innengewinde
11. Längsachse
12. Außengewinde
13. Kopf
14. erste Anlagefläche
15. Anschlagsfläche
16. Stützfläche
17. zweite Anlagefläche
18. Aussparung
19. Grundfläche
20. Mantelfläche
21. Stirnseite
22. Absatz
23. Eingriffsabschnitt
24. Außenfläche
25. Freiraum
F Querkraft
P Drehpunkt.

## Patentansprüche

1. Bauteilanbindung für eine Radaufhängung eines Kraftfahrzeuges mit einem Lenker (2), der an zumindest einem seiner Enden ein Lager (4), insbesondere ein Gummilager, mit einer Innenhülse (7) aufweist, und einem Radträger (3), die durch ein Befestigungsmittel (5) lösbar miteinander verbunden sind, wobei das Befestigungsmittel (5) die Innenhülse (7) in Axialrichtung mit einer dem Radträger (3) zugewandten ersten Anlagefläche (14) gegen eine Anschlagsfläche (15) des Radträgers (3) presst, wobei der Radträger (3) eine Stützfläche (16) aufweist, an der die Innenhülse (7) mit einer zweiten Anlagefläche (17) anliegt, und wobei die Stützfläche (16) gegenüber der Anschlagsfläche (15) derart geneigt ist, dass mittels ihr im Bereich des Lagers (4) in Radialrichtung auftretende Querkräfte (F) abstützbar sind, wobei der Radträger (3) eine Aussparung (18) aufweist, in die sich die Innenhülse (7) mit ihrem dem Radträger (3) zugewandten Ende hinein erstreckt, wobei sich das Befestigungsmittel (5) durch die Innenhülse (7) hindurch bis in eine zur Innenhülse (7) koaxiale Bohrung (9) hinein erstreckt, in die das Befestigungsmittel (5) eingeschraubt ist, wobei die Aussparung (18) und die Bohrung (9) zusammen als Stufenbohrung ausgebildet sind.

2. Bauteilanbindung nach dem vorherigen Anspruch, **dadurch gekennzeichnet, dass** die Stützfläche (16) im Längsschnitt der Bauteilanbindung (1) parallel zur Längsachse des Befestigungsmittels (5) ausgerichtet ist.

3. Bauteilanbindung nach einem oder mehreren der vorherigen Ansprüche, **dadurch gekennzeichnet, dass** die Stützfläche (16) durch eine Seitenfläche, insbesondere zylindrische Mantelfläche (20), der Aussparung (18) gebildet ist.

4. Bauteilanbindung nach einem oder mehreren der vorherigen Ansprüche, **dadurch gekennzeichnet, dass** die erste Anlagefläche (14) an dem bauteilseitigen Ende der Innenhülse (7), insbesondere an deren Stirnseite (21), ausgebildet ist und/oder dass die mit dieser korrespondierende Anschlagsfläche (15) im Inneren der Aussparung (18), insbesondere durch eine Grundfläche (19) der Aussparung (18), ausgebildet ist.

5. Bauteilanbindung nach einem oder mehreren der vorherigen Ansprüche 1 bis 3, **dadurch gekennzeichnet, dass** die erste Anlagefläche (14) in Axialrichtung vom bauteilseitigen Ende der Innenhülse (7), insbesondere durch die Stützfläche (16), beabstandet angeordnet ist und/oder dass die mit dieser korrespondierende Anschlagsfläche (15) außerhalb der Aussparung (18), ausgebildet ist.

6. Bauteilanbindung nach Anspruch 5, **dadurch gekennzeichnet, dass** der Abstand in Axialrichtung zwischen dem bauteilseitigen Ende der Innenhülse (21) und deren erster Anlagefläche (14) kleiner ist als die axiale Tiefe der Aussparung (18), so dass zwischen dem Ende der Innenhülse (21) und der Grundfläche (19) der Aussparung ein Freiraum (25) ausgebildet ist.

7. Bauteilanbindung nach einem oder mehreren der vorherigen Ansprüche 5 bis 6, **dadurch gekennzeichnet, dass** die Stützfläche (16) durch einen vom bauteilseitigen Ende der Innenhülse ausgehenden zylindrischen Schaftabschnitt (23) und die vom bauteilseitigen Ende der Innenhülse beabstandete Anschlagsfläche (15) durch einen sich an diesen Schaftabschnitt (23) anschließenden Absatz (22) ausgebildet sind.

8. Bauteilanbindung nach einem oder mehreren der vorherigen Ansprüche, **dadurch gekennzeichnet, dass** die erste Anlagefläche (14) und die damit korrespondierende Anschlagsfläche (15) konisch ausgebildet sind.

9. Bauteilanbindung nach einem oder mehreren der vorherigen Ansprüche, **dadurch gekennzeichnet, dass** die Innenhülse (7) und/oder der Radträger (3) aus Stahl und/oder Aluminium hergestellt sind.

10. Bauteilanbindung nach einem oder mehreren der vorherigen Ansprüche, **dadurch gekennzeichnet, dass** die Bauteilanbindung (1) als einschnittige Verbindung ausgebildet ist.

11. Verwendung einer Bauteilanbindung nach einem der vorhergehenden Ansprüche in einem Fahrwerk eines Kraftfahrzeuges zwischen einem Lenker (2), insbesondere einem Mehrpunktlenker, und einem Radträger (3).

12. Verwendung einer Bauteilanbindung nach Anspruch 11, wobei der Mehrpunktlenker (2) zumindest als ein Längs- und/oder Querlenker ausgebildet ist.

13. Verfahren zur Herstellung einer Bauteilanbindung nach einem der Ansprüche von 1 bis 10, insbesondere in einem Kraftfahrzeug-Fahrwerkzwischen einem Lenker (2), insbesondere einem Mehrpunktlenker, und einem Radträger (3), **gekennzeichnet durch** die Schritte
- Herstellen einer Innenhülse (7) mit zumindest einem festgelegtem Außendurchmesser und zumindest einer ersten Anlagefläche (14)
- Form- und oder stoffschlüssiges Verbinden der Innenhülse (7) mit dem Lenker (2)
- Herstellen des Anbindungsbauteils (3) mit zumindest einer zur späteren Verbindung mit dem Lenker (2) dienenden und zum Außendurchmesser der Innenhülse (7) passenden Aussparung (18) mit zumindest einer Anlagefläche (17) und zumindest einer Stützfläche (16), insbesondere derart, dass der Außendurchmesser der Innenhülse (7) im Bereich der Anlagefläche (17) und der Durchmesser der Aussparung (18) das gleiche Nennmaß aufweisen
- Bereitstellen des Anbindungsbauteils (3) und des Lenkers (2)
- Positionieren und Halten des Lenkers (2) gegenüber dem Radträger (3), so dass die Längsachsen (11) der Bauteile (2, 3) zumindest annähernd fluchten und die Anlageflächen bzw. Mantelfläche (14, 15, 17, 18) und/oder die Stützfläche (16) aneinander anliegen
- Formschlüssiges Verbinden des Radträgers (3) mit dem Lenker (2) durch ein Befestigungsmittel (5), insbesondere durch Verschrauben.

14. Verfahren nach Anspruch 13, **dadurch gekennzeichnet, dass** der Lenker (2) und der Radträger (3) mittels einer Übergangspassung oder einer Übermaßpassung miteinander verbindbar sind.

## Claims

1. Component attachment for a wheel suspension system of a motor vehicle having a link (2) which, at at least one of its ends, has a bearing (4), in particular a rubber bearing, with an inner sleeve (7), and having a wheel support (3), which link (2) and wheel support (3) are connected releasably to one another by way of a fastening means (5), the fastening means (5) pressing the inner sleeve (7) in the axial direction by way of a first bearing face (14) which faces the wheel support (3) against a stop face (15) of the wheel support (3), the wheel support (3) having a supporting face (16), against which the inner sleeve (7) bears by way of a second bearing face (17), and the supporting face (16) being inclined with respect to the stop face (15) in such a way that transverse forces (F) which occur in the radial direction in the region of the bearing (4) can be supported by means of the said supporting face (16), the wheel support (3) having a cut-out (18), into which the inner sleeve (7) extends by way of its end which faces the wheel support (3), the fastening means (5) extending through the inner sleeve (7) as far as into a bore (9) which is coaxial with respect to the inner sleeve (7), into which bore (9) the fastening means (5) is screwed, the cut-out (18) and the bore (9) being configured together as a stepped bore.

2. Component attachment according to the preceding claim, **characterized in that** the supporting face (16) is oriented parallel to the longitudinal axis of the fastening means (5) in the longitudinal section of the component attachment (1).

3. Component attachment according to one or both of the preceding claims, **characterized in that** the supporting face (16) is formed by way of a side face, in particular a cylindrical circumferential face (20), of the cut-out (18).

4. Component attachment according to one or more of the preceding claims, **characterized in that** the first bearing face (14) is configured at the component-side end of the inner sleeve (7), in particular on its front side (21), and/or **in that** the stop face (15) which corresponds with it is configured in the interior of the cut-out (18), in particular by way of a bottom face (19) of the cut-out (18).

5. Component attachment according to one or more of the preceding Claims 1 to 3, **characterized in that** the first bearing face (14) is arranged spaced apart in the axial direction from the component-side end of the inner sleeve (7), in particular by way of the supporting face (16), and/or **in that** the stop face (15) which corresponds with it is configured outside the cut-out (18).

6. Component attachment according to Claim 5, **characterized in that** the spacing in the axial direction between the component-side end of the inner sleeve (21) and its first stop face (14) is smaller than the axial depth of the cut-out (18), with the result that a clearance (25) is configured between the end of the inner sleeve (21) and the bottom face (19) of the cut-out.

7. Component attachment according to one or both of the preceding Claims 5 and 6, **characterized in that** the supporting face (16) is configured by way of a cylindrical shank section (23) which emanates from the component-side end of the inner sleeve, and the stop face (15) which is spaced apart from the component-side end of the inner sleeve is configured by way of a shoulder (22) which adjoins the said shank section (23) .

8. Component attachment according to one or more of the preceding claims, **characterized in that** the first bearing face (14) and the stop face (15) which corresponds with it are of conical configuration.

9. Component attachment according to one or more of the preceding claims, **characterized in that** the inner sleeve (7) and/or the wheel support (3) are/is produced from steel and/or aluminium.

10. Component attachment according to one or more of the preceding claims, **characterized in that** the component attachment (1) is configured as a single-shear connection.

11. Use of a component attachment according to one of the preceding claims in a chassis of a motor vehicle between a link (2), in particular a multi-point link, and a wheel support (3).

12. Use of a component attachment according to Claim 11, the multi-point link (2) being configured at least as a longitudinal and/or transverse link.

13. Method for producing a component attachment according to one of Claims 1 to 10, in particular in a motor vehicle chassis between a link (2), in particular a multi-point link, and a wheel support (3), **characterized by** the steps
- producing of an inner sleeve (7) with at least one fixed external diameter and at least one first bearing face (14)
- connecting of the inner sleeve (7) to the link (2) in a positively locking and/or non-positive manner
- producing of the attachment component (3) with at least one cut-out (18) which serves for later connecting to the link (2) and matches the external diameter of the inner sleeve (7), with at least one bearing face (17) and at least one supporting face (16), in particular in such a way that the external diameter of the inner sleeve (7) in the region of the bearing face (17) and the diameter of the cut-out (18) have the same nominal dimension
- providing of the attachment component (3) and the link (2)
- positioning and holding of the link (2) with respect to the wheel support (3), with the result that the longitudinal axes (11) of the components (2, 3) are aligned at least approximately, and the bearing faces or circumferential face (14, 15, 17, 18) and/or the supporting face (16) bear against one another
- connecting of the wheel support (3) to the link (2) in a positively locking manner by way of a fastening means (5), in particular by way of screwing.

14. Method according to Claim 13, **characterized in that** the link (2) and the wheel support (3) can be connected to one another by means of a transition fit or an oversize fit.

## Revendications

1. Raccord de composant pour une suspension de roue d'un véhicule automobile comprenant un bras oscillant (2) qui présente, au niveau d'au moins l'une de ses extrémités, un coussinet (4), en particulier un coussinet en caoutchouc, avec une douille intérieure (7), et un support de roue (3), lesquels sont connectés l'un à l'autre de manière détachable par un moyen de fixation (5), le moyen de fixation (5) pressant la douille intérieure (7) dans la direction axiale avec une première surface d'appui (14) tournée vers le support de roue (3) contre une surface de butée (15) du support de roue (3), le support de roue (3) présentant une surface de support (16) contre laquelle s'applique la douille intérieure (7) avec une deuxième surface d'appui (17), et la surface de support (16) étant inclinée par rapport à la surface de butée (15) de telle sorte que les forces transversales (F) s'exerçant dans la direction radiale dans la région du coussinet (4) puissent être supportées par celle-ci, le support de roue (3) présentant un évidement (18) dans lequel s'étend la douille intérieure (7) avec son extrémité tournée vers le support de roue (3), le moyen de fixation (5) s'étendant à travers la douille intérieure (7) jusque dans un alésage (9) coaxial à la douille intérieure (7), dans lequel est vissé le moyen de fixation (5), l'évidement (18) et l'alésage (9) étant réalisés ensemble sous forme d'alésage étagé.

2. Raccord de composant selon la revendication précédente, **caractérisé en ce que** la surface de support (16), en coupe longitudinale du raccord de composant (1), est orientée parallèlement à l'axe longitudinal du moyen de fixation (5).

3. Raccord de composant selon l'une quelconque ou plusieurs des revendications précédentes, **caractérisé en ce que** la surface de support (16) est formée par une surface latérale, en particulier une surface d'enveloppe cylindrique (20), de l'évidement (18).

4. Raccord de composant selon l'une quelconque ou plusieurs des revendications précédentes, **caractérisé en ce que** la première surface d'appui (14) est réalisée au niveau de l'extrémité côté composant de la douille intérieure (7), en particulier au niveau de son côté frontal (21) et/ou **en ce que** la surface de butée (15) correspondant avec celle-ci est réalisée à l'intérieur de l'évidement (18), en particulier par une surface de base (19) de l'évidement (18).

5. Raccord de composant selon l'une quelconque ou plusieurs des revendications précédentes 1 à 3, **caractérisé en ce que** la première surface d'appui (14) est disposée dans la direction axiale à distance de l'extrémité côté composant de la douille intérieure (7), en particulier à travers la surface de support (16), et/ou **en ce que** la surface de butée (15) correspondant avec celle-ci est réalisée à l'extérieur de l'évidement (18).

6. Raccord de composant selon la revendication 5, **caractérisé en ce que** la distance dans la direction axiale entre l'extrémité côté composant de la douille intérieure (21) et sa première surface d'appui (14) est inférieure à la profondeur axiale de l'évidement (18), de telle sorte qu'entre l'extrémité de la douille intérieure (21) et la surface de base (19) de l'évidement soit réalisé un espace libre (25).

7. Raccord de composant selon l'une quelconque ou plusieurs des revendications précédentes 5 à 6, **caractérisé en ce que** la surface de support (16) est réalisée par une portion d'arbre cylindrique (23) sortant de l'extrémité côté composant de la douille intérieure et la surface de butée (15) espacée de l'extrémité côté composant de la douille intérieure est réalisée par un épaulement (22) se raccordant à cette portion d'arbre (23).

8. Raccord de composant selon l'une quelconque ou plusieurs des revendications précédentes, **caractérisé en ce que** la première surface d'appui (14) et la surface de butée (15) correspondant avec celle-ci sont réalisées sous forme conique.

9. Raccord de composant selon l'une quelconque ou plusieurs des revendications précédentes, **caractérisé en ce que** la douille intérieure (7) et/ou le support de roue (3) sont fabriqués en acier et/ou en aluminium.

10. Raccord de composant selon l'une quelconque ou plusieurs des revendications précédentes, **caractérisé en ce que** le raccord de composant (1) est réalisé sous forme de connexion en cisaillement.

11. Utilisation d'un raccord de composant selon l'une quelconque des revendications précédentes dans un châssis d'un véhicule automobile entre un bras oscillant (2), en particulier un bras oscillant multipoint, et un support de roue (3).

12. Utilisation d'un raccord de composant selon la revendication 11, dans laquelle le bras oscillant multipoint (2) est réalisé au moins sous forme de bras oscillant longitudinal et/ou transversal.

13. Procédé de fabrication d'un raccord de composant selon l'une quelconque des revendications 1 à 10, en particulier dans un châssis de véhicule automobile entre un bras oscillant (2), en particulier un bras oscillant multipoint, et un support de roue (3), **caractérisé par** les étapes suivantes :
- fabrication d'une douille intérieure (7) avec au moins un diamètre extérieur fixe et au moins une première surface d'appui (14),
- assemblage par correspondance de formes ou par liaison de matière de la douille intérieure (7) avec le bras oscillant (2),
- fabrication du composant de raccordement (3) avec au moins un évidement (18) servant à la connexion ultérieure au bras oscillant (2) et adapté au diamètre extérieur de la douille intérieure (7), avec au moins une surface d'appui (17) et au moins une surface de support (16), en particulier de telle sorte que le diamètre extérieur de la douille intérieure (7) dans la région de la surface d'appui (17) et le diamètre de l'évidement (18) présentent la même dimension nominale,
- mise à disposition du composant de raccordement (3) et du bras oscillant (2),
- positionnement et fixation du bras oscillant (2) par rapport au support de roue (3), de telle sorte que les axes longitudinaux (11) des composants (2, 3) soient au moins approximativement alignés et que les surfaces d'appui ou la surface d'enveloppe (14, 15, 17, 18) et/ou la surface de support (16) s'appliquent les unes contre les autres,
- assemblage par correspondance de formes du support de roue (3) avec le bras oscillant (2) par un moyen de fixation (5), en particulier par vissage.

14. Procédé selon la revendication 13, **caractérisé en ce que** le bras oscillant (2) et le support de roue (3) peuvent être connectés l'un à l'autre au moyen d'un ajustement de transition ou d'un ajustement avec surdimensionnement.
